# EUROPEAN PATENT APPLICATION

(11) **EP 4 276 688 A1**
(43) Date of publication of application: **15.11.2023**
(21) Application number: 22305719.1
(22) Date of filing: 13.05.2022
(51) Int. Cl.: G06K 19/077

(54) **SIM ON MODULE REEL MANUFACTURING PROCESS**

(71) Applicant: Thales Dis France SAS, 92190 Meudon (FR)
(72) Inventor: DOSSETTO, Lucile, 83270 SAINT CYR SUR MER (FR); OTTOBON, Stéphane, 83270 SAINT CYR SUR MER (FR); AUDOUARD, Laurent, 13400 AUBAGNE (FR); ROBERTET, Laurence, 13400 AUBAGNE (FR)
(74) Representative: Castelo, Jérôme

(57) **Abstract**

A method of manufacturing a smart card (1) such as a SIM card comprises the steps of providing at least one reel tape (2) extending along a longitudinal direction (L) and laminating at least a first card body layer (5) to the reel tape (2). The reel tape (2) comprises at least one electrically conductive layer (3) and at least one dielectric layer (4). The first card body layer (5) comprises a plurality of apertures (6, 6a, ...). The apertures (6, 6a, ...) are configured to at least partially receive a plurality of electronic chips (7, 7a, ...).

## Description

### TECHNICAL FIELD

The present invention relates to a method of manufacturing a smart card such as a SIM card according to claim 1 and to the use of a reel tape in a method of manufacturing a smart card such as a SIM card according to claim 15.

### PRIOR ART

Current methods of manufacturing smart cards such as Subscriber Identity Module (SIM) cards involve a lot of manufacturing steps such as module assembly, card molding, embedding of the module in the smart card, printing of the smart card, etc. Furthermore, the manufacturing typically requires a lot of material. For instance, in order to generate a smart card in a small format such as 2FF, 3FF or 4FF, a smart card in a large format such as 1FF is produced in a first step and which is thereafter reduced into the smaller formats, wherein only a part of the originally large card is used and a lot of material is discarded. These processes are not environment friendly and costly.

### SUMMARY OF THE INVENTION

It is an object of the present invention to provide a method of manufacturing a smart card that overcomes the drawback of the prior art. In particular, it is an object to provide a method of manufacturing a smart card that requires fewer material and is less costly.

This object is achieved with a method according to claim 1. In particular, a method of manufacturing a smart card such as a Subscriber Identity Module (SIM) card is provided, wherein the method comprises the steps of i) providing at least one reel tape extending along a longitudinal direction, and ii) laminating at least a first card body layer in reel to the reel tape. The reel tape comprises at least one electrically conductive layer and at least one dielectric layer. The first card body layer comprises a plurality of apertures, and wherein the apertures are configured to at least partially receive a plurality of electronic chips.

That is to say, the present invention is based on the insight that the final smart card can be directly assembled in reel, wherein fewer method steps are required since steps such as embedding and printing steps are avoided and a material consumption is reduced since the manufacturing of a large smart card such as the 1FF smart card and a subsequent reduction to a smaller smart card is dispensed with. In fact, since less material is required such as less polymer, adhesive, ink, etc. as typically required in the manufacturing of smart cards the method according to the present invention is more environment friendly and cost effective. It furthermore allows to reduce the transport CO₂ costs as the smart card in reel has a much lighter weight.

With respect to a vertical direction running perpendicularly to the longitudinal direction of the reel tape, the dielectric layer is preferably arranged above the electrically conductive layer and the first card body layer is arranged above the dielectric layer.

The electrically conductive layer of the reel tape can be a continuous layer that continuously extends along the longitudinal direction of the reel tape. The dielectric layer of the reel tape can be a continuous layer that continuously extends along the longitudinal direction of the reel tape.

Alternatively, the dielectric layer of the reel tape can be an intermittent layer that comprises a plurality of apertures being arranged along the longitudinal direction of the reel tape. In this case it is particularly preferred that the apertures of the dielectric layer are at least partially arranged congruent with the apertures of the first card body layer when seen along the vertical direction. Being at least partially congruent means that the apertures of the dielectric layer and the apertures of the first card body layer are at least partially at a same horizontal location with respect to a horizontal direction running perpendicularly to the vertical direction, whereas their vertical locations with respect to the vertical direction are staggered.

The apertures are preferably generated in the first card body layer before the first card body layer is laminated to the reel tape. The apertures are particularly preferably generated by punching the first card body layer.

The reel tape preferably comprises longitudinal sides extending along the longitudinal direction, and wherein a plurality of perforations are arranged along the longitudinal direction of the reel tape and in regions of the longitudinal sides of the reel tape.

The perforations are particularly preferably arranged in regions of the longitudinal sides of the dielectric layer of the reel tape and possibly furthermore also in regions of the longitudinal sides of the electrically conductive layer. That is to say, it is conceivable that the electrically conductive layer as well as the dielectric layer of the reel tape comprises perforations in the event that the electrically conductive layer is present in the regions of the longitudinal sides of the reel tape. However, it is likewise conceivable that only the dielectric layer of the reel tape comprises the perforations for instance in the event that only the dielectric layer is present in the regions of the longitudinal sides of the reel tape and in case that the electrically conductive layer has been removed from these regions e.g. during a pattern etching of contact sides.

Being arranged in regions of the longitudinal sides of the reel tape means that the perforations are arranged in proximity to the longitudinal sides of the reel tape and not, for instance, in a middle region of the reel tape.

It is conceivable that the perforations are provided in the region of only one longitudinal side of the reel tape, wherein the other longitudinal side of the reel tape lacks the perforations. Perforations on both longitudinal sides of the reel tape are however likewise conceivable.

The perforations can extend at least partially or entirely through the reel tape when seen along the vertical direction. To this end it is particularly preferred that the perforations extend at least partially or entirely through the dielectric layer when seen along the vertical direction. In the event that the perforations are present in the electrically conductive layer, it is preferred that said perforations extend at least partially or entirely through the electrically conductive layer when seen along the vertical direction.

The perforations serve the purpose of conveying the reel tape along a transport direction of a module reel and are configured to be engaged by corresponding protrusions of the module reel. That is, the perforations correspond to so-called sprocket holes.

The first card body layer preferably comprises longitudinal sides extending along the longitudinal direction of the reel tape, and wherein a plurality of perforations are arranged along the longitudinal direction of the reel tape and in regions of the longitudinal sides of the first card body layer.

That is to say, the first card body layer can comprise perforations that serve the purpose of conveying the reel tape along the transport direction. Hence, the perforations of the first card body layer correspond to so-called sprocket holes as well. To this end, it is conceivable that both, the reel tape and the first card body layer, comprise the perforations. Alternatively, it is conceivable that only the first card body layer comprises the perforations.

The perforations are preferably generated in the first card body layer before the first card body layer is laminated to the reel tape. However, it is likewise conceivable that the perforations are generated in the card body layer after its lamination to the reel tape. Furthermore, in the event that the perforations are present in the first card body layer and in the reel tape, it is conceivable that the perforations are generated in the first card body layer and the reel tape after lamination of the card body layer to the reel tape and preferably simultaneously.

The first card body layer and the reel tape preferably define in each case a width with respect to a transverse direction running perpendicularly to the longitudinal direction of the reel tape. The width of the first card body layer preferably essentially corresponds to the width of the reel tape when seen along the transverse direction. Alternatively, the width of the fist card body layer is preferably smaller than the width of the reel tape when seen along the transverse direction.

In the event that the width of the first card body layer essentially corresponds to the width of the reel tape when seen along the transverse direction it is preferred that the first card body layer extends at least partially over the longitudinal sides of the reel tape. In this case it is furthermore preferred that the first card body layer comprises the perforations. In the event that the width of the first card body layer is smaller than the width of the reel tape when seen along the transverse direction it is preferred that the first card body layer does not extend over the longitudinal sides of the reel tape but that said longitudinal sides of the reel tape remain uncovered. In this case, it is furthermore preferred that the reel tape comprises the perforations.

The width of the reel tape when seen along the transverse direction preferably is 35 millimeter, 70 millimeter or 150 millimeter. Different widths are of course likewise conceivable. The width of the reel tape preferably depends on the desired final dimensions of the smart card, see further below.

The apertures of the first card body layer are preferably arranged sequentially when seen along the longitudinal direction of the reel tape. Additionally or alternatively, the apertures of the first card body layer are preferably arranged in a single line or in two or more preferably parallel lines when seen along the longitudinal direction of the reel tape.

The first card body layer preferably extends along the longitudinal direction of the reel tape.

The first card body layer is preferably laminated directly onto the dielectric layer of the reel tape in the absence of an adhesive element. Alternatively, the first card body layer is preferably laminated indirectly onto the dielectric layer of the reel tape via a first adhesive element.

The first adhesive element is preferably provided as an intermittent layer comprising a plurality of apertures being arranged along the longitudinal direction of the reel tape.

The apertures of the first adhesive element are preferably arranged at least partially congruent with the apertures of the first card body layer when seen along the vertical direction. The apertures in the first adhesive element are preferably generated by punching and/or prior to lamination of the first card body layer to the reel tape.

At least a further first card body layer is preferably laminated to the reel tape. Said further first card body layer preferably comprises a plurality of further first apertures being configured to receive a plurality of electronic chips.

That is, a single first card body layer or two or more first card body layers, herein called further first card body layers, can be provided. Explanations made with regard to the first card body layer preferably likewise apply to the further first card body layer and vice versa.

The first card body layer and the further first card body layer preferably extend parallel to one another with respect to the longitudinal direction of the reel tape.

The first card body layer and the further first card body layer preferably have the shape of strips extending along the longitudinal direction of the reel tape.

The first card body layer and the further first card body layer can be arranged immediately adjacent to one another or can be arranged laterally spaced from one another when seen along the transverse direction of the reel tape.

A plurality of electronic chips are preferably at least partially arranged in the apertures of the first card body layer and, if present, in the further first card body layer. Thus, a plurality of electronic chips are preferably provided on the reel tape, and wherein said electronic chips are at least partially arranged in the first card body layer and, if present, in the further first card body layer. In other words, the first card body layer and, if present, the further first card body layer preferably at least partially surround the electronic chips.

The electronic chips are preferably in connection with the electrically conductive layer of the reel tape. The electronic chips are particularly preferably electrically connected to the electrically conductive layer of the reel tape. Various ways of electrically connecting the electronic chips to the electrically conductive layer are conceivable, e.g. the electrical connection can be established via wire bonding or in a flip chip process. The conductive layer is generally plated with Nickel and Gold. The electronic chips can be arranged on the electrically conductive layer of the reel tape and, for instance, at least partially within the apertures of the dielectric layer. In fact, in the event that the dielectric layer is an intermitted layer, it is preferred that the electronic chips are arranged on the electrically conductive layer as well as within the apertures of the dielectric layer. In fact, said apertures of the dielectric layer are preferably used to receive the electronic chips as well as any wire bonding of the electronic chips that electrically connect the electronic chips to the electrically conductive layer. Alternatively, the electronic chips can be arranged on the dielectric layer of the reel tape. In fact, in the event that the dielectric layer of the reel tape is a continuous layer it is preferred that the electronic chips are arranged on said dielectric layer, in particular on the upper surface of the dielectric layer.

In any case, the electronic chips are particularly preferably electrically connected to the electrically conductive layer of the reel tape after the lamination of the first card body layer to the reel tape.

In any case it is preferred that the electronic chips are connected to the reel tape, either to the dielectric layer or to the electrically conductive layer, via at least one adhesive element such as glue. That is, the electronic chips can be glued to the electrically conductive layer or to the dielectric layer of the reel tape.

Different arrangements and dimensions of the electronic chips are conceivable. For instance, when seen along the longitudinal direction of the reel tape, a pitch between successive electronic chips can be 4.75 millimeter, 9.5 millimeter or 14.25 millimeter. Other pitches are of course likewise conceivable and are preferably chosen with respect to the end-use application of the smart card and associated formats, if any.

The electronic chips are preferably at least partially encapsulated by at least one encapsulation element. The encapsulation element preferably is a resin or the like. To this end it is preferred to use a resin that is well-known in the art such as a UV-curing resin, e.g. an epoxy resin or a urethane resin, or a thermal resin. Said encapsulation element thus serves the purpose of protecting the electronic chips. Additionally or alternatively it is preferred that the encapsulation element is filled into the apertures of the first card body layer and, if present, into the further apertures of the further first card body layer. Said apertures are associated with a height when seen along the vertical direction. To this end it is preferred to fill the encapsulation element into the apertures to a level being smaller than, equal to, or larger than the height of the apertures.

However, it should be noted that no encapsulation of the electronic chips is necessarily needed. Instead, and as will be explained further below, a second card body layer could be provided, wherein said second card body layer can be arranged and configured such as to hermetically seal and thereby protect the electronic chips.

That is, at least a second card body layer is preferably laminated onto the first card body layer. The second card body layer preferably extends along the longitudinal direction of the reel tape. Additionally or alternatively, the second card body layer preferably closes the apertures of the first card body layer towards an outside.

With respect to the vertical direction the second card body layer is preferably arranged above the first card body layer.

In fact, the smart cards produced according to the method of the invention preferably extend along an extension direction. The extension direction of the smart card extends from a bottom side of the smart card towards a top side of the smart card. In other words, the extension direction can be seen as the vertical direction. In the present case, the electrically conductive layer of the reel tape preferably provides the top side of the smart card and the second card body layer preferably provides the bottom side of the smart card. Hence, when seen along the vertical direction or the extension direction, respectively, the layers are preferably arranged in the following subsequent order:
- Second card body layer;
- First card body layer;
- Dielectric layer;
- Electrically conductive layer.

The second card body layer preferably defines a width with respect to the transverse direction of the reel tape. The width of the second card body layer can essentially correspond to the width of the reel tape or can be smaller than the width of the reel tape when seen along the transverse direction. Additionally or alternatively, the width of the second card body layer preferably corresponds to the width of the first card body layer or is larger than the width of the first card body layer when seen along the transverse direction. That is to say, it is preferred that the second card body layer covers the first card body layer when seen along the transverse direction.

In the event that a first card body layer and one or more further first card body layers are present, it is conceivable that the second card body layer is laminated to all of these card body layers. However, it is likewise conceivable that one or more further second card body layers are present. These further second card body layers can be laminated to the further first card body layers. Explanations made with regard to the second card body layer preferably likewise apply to the further second card body layer and vice versa. The second card body layer and the further second card body layer preferably extend parallel to one another with respect to the longitudinal direction of the reel tape. The second card body layer and the further second card body layer preferably have the shape of strips extending along the longitudinal direction of the reel tape. The second card body layer and the further second card body layer can be arranged immediately adjacent to one another or can be arranged laterally spaced from one another when seen along the transverse direction of the reel tape.

The second card body layer can be laminated directly onto the first card body layer in the absence of an adhesive element. Alternatively, the second card body layer preferably can be laminated indirectly onto the first card body layer via at least a second adhesive element.

The first adhesive element and the second adhesive element can correspond to an adhesive as it is known in the field of the art, e.g. to glue.

However, especially in the event that the first and/or second card body layer are so-called pre-preg layers, see below, the provision of an adhesive element can be dispensed with since the pre-preg material of such layers are tacky (so-called B-stage state), see also below.

Additionally or alternatively, in the event that an encapsulation element such as resin is used and filled to a level being higher than the height of the first card body layer with respect to the vertical direction, part of the encapsulation element will flow between the first card body layer and the second card body layer and can serve as an adhesive element as well.

If present, the second adhesive element can be provided as a layer that continuously extends along the longitudinal direction of the reel tape. Alternatively, the second adhesive element can be provided as an intermittent layer that comprises a plurality of apertures being arranged along the longitudinal direction of the reel tape. The apertures in the second adhesive element are preferably arranged at least partially congruent with the apertures of the first card body layer when seen along the vertical direction or the extension direction of the smart card, respectively.

The first card body layer and, if present, the further first card body layer and/or the second card body layer preferably comprises or consists of at least one polymer and/or of at least one paper-based compound. The polymer preferably is a thermoplastic polymer and/or a transparent polymer. The at least one polymer particularly preferably is polyvinylchloride, polycarbonate, a polyester such as an amorphous polyester, a co-polyester, or a semicrystalline polyester and preferably polyethylene terephthalate polyethylene or naphthalate (PEN), or polylactic acid (PLA), or acrylonitrile butadiene styrene (ABS). It is furthermore particularly preferred that the at least one polymer is a recycled polymer such as recycled polyvinyl chloride (rPVC), recycled polycarbonate, or recycled polyethylene terephthalate (rPET), etc. The paper-based compound preferably is paper.

Alternatively, the first card body layer and, if present, the further first card body layer and/or the second card body layer can comprise or consist of pre-impregnated fibers and a partially cured polymer matrix. That is, the first card body layer and/or the second card body layer can likewise be so-called pre-pregs, i.e. a composite material comprising "pre-impregnated" fibers and a partially cured polymer matrix, such as epoxy or phenolic resin, or even thermoplastic mixed with liquid rubbers or resins. Hence, the first and/or second card body layer being pre-peg layers are not completely polymerized layers when being laminated onto the reel tape. The card body layer(s) being pre-preg layers have the advantage of being tacky. As such, the provision of an adhesive element for lamination can be dispensed with. A complete polymerization of the pre-preg layer(s) is preferably accomplished at the end of the lamination of these card body layers and before the singulation, see further below. The complete polymerization of the card body layers is preferably done by baking, i.e. by heating these layers in order to cross-link the polymer(s).

However, it should be noted that the card body layers can comprise or consist of many other compounds than just those mentioned above. In fact, conceivable materials for the first and second card body layers are those that can be laminated to the reel tape and which fulfil further criteria of the smart card industry such as a particular maximal thicknesses.

The first card body layer and the second card body layer can be the same or different from one another. For instance, the first card body layer could be a pre-peg layer and the second card body layer could be a rPVC (recycled PVC) layer.

With respect to the vertical direction the first card body layer preferably has a thickness that corresponds to or is close to a thickness of the encapsulation element. In other words, the first card body layer preferably has a thickness that is configured to protect the electronic chips, the adhesive element such as the glue, and the electrical connections. Furthermore, with respect to the vertical direction, the second card body layer preferably has a thickness that meets a particular smart card standard. For instance, if the smart card to be manufactured corresponds to a 4FF SIM, it is preferred that the thickness of the smart card on reel is 0.67 millimeter ± 0.03-0.07 millimeter with respect to the vertical direction. In this case it is preferred that the second card body layer has a thickness along the vertical direction such, a total thickness of the smart card reaches said thickness of about 600 micrometer to 700 micrometer in the event that the smart card is a 4FF SIM. If the final form factor is not a SIM card but a wearable banking device for example the different thicknesses could be different.

The first card body layer and/or the second card body layer can comprise at least one antenna. Furthermore, at least one further electrically conductive layer can be provided on the reel tape. Said further electrically conductive layer is preferably arranged between the first card body layer and the reel tape with respect to the vertical direction and is preferably configured to communicate with the antenna in the first card body layer and/or the second card body layer.

The first card body layer can comprise at least one antenna being configured to communicate with a remote device such as a payment terminal. Said antenna preferably is connected to the electronic module comprising the electronic chip in a wired manner or via a silver glue dispense or ACF or solder paste. Additionally or alternatively, the second card body layer can comprise at least one antenna being configured to communicate with a remote device such as a payment terminal. Said antenna preferably is connected to the electronic chip in a wireless manner, preferably via a coil. However, it should be noted that the antenna could likewise be connected to the electronic module in a wired manner or via a silver glue dispense or ACF or solder paste in the event that the first or second card body layer are plated through vias holes that allow a connection of the top side of the antenna with the other side. The antennas on the card body layers can be done by wire embedding technology or by metal etching as it is well-known in the art.

The antenna of the first card body layer and/or of the second card body layer can furthermore be connected to the reel tape, in particular to the electrically conductive layer of the reel tape, in a wired manner. For instance, the antenna could be connected via welding thermocompression, ACF adhesive, silver glue, etc., as it is well-known in the art.

The further electrically conductive layer is particularly preferably provided from a double side tape reel. That is, the reel tape being initially provided and onto which the first card body layer is laminated to preferably comprises two electrically conductive layers and the at least one dielectric layer, wherein the dielectric layer is arranged between the electrically conductive layers when seen along the vertical direction.

The further electrically conductive layer is particularly preferably arranged between the first card body layer of the card body element and the dielectric layer of the reel tape when seen along the extension direction of the smart card. Such a smart card can be referred to as a dual interface smart card and is preferably used in payment applications.

Said dual interface smart card could be provided as a so-called coil-on-module smart card, wherein a communication between an antenna in the first card body layer and/or the second card body layer and the electronic chip is established by an inductive coupling, wherein the antenna in the first card body layer and/or the second card body layer acts as a booster for an antenna being provided on an electronic module comprising the electronic chip and preferably serves the purpose of enhancing a communication over long distances with a payment terminal for example.

The further electrically conductive layer preferably comprises a plurality of apertures being arranged along the longitudinal direction of the reel tape. Said plurality of apertures are furthermore preferably arranged at least partially congruent with the apertures of the first card body layer and, if applicable, with the apertures of the first adhesive element when seen along the extension direction. It is furthermore preferred that the electronic chips are at least partially arranged within the apertures of the further electrically conductive layer.

In the event that no such further electrically conductive layer is present, the smart card can be referred to as a simple face smart card module. Such a smart card is preferably used in mobile phone applications.

Hence, in another aspect of the present invention a smart card manufactured in the method according to the present invention is used in mobile phone applications, payment applications, etc.

The method according to the invention allows the manufacturing of smart cards having desired dimensions since the width and length of the smart cards depends on the width and the length of the reel tape, and wherein said width and length of the reel tape can be selected accordingly. As such, smart cards can be manufactured whose dimensions are smaller than the usual payment cards. These small dimensions of the smart card enables new uses of the smart cards. For instance, smart cards according to the invention could be used in slots of a bracelet, a watch or the like for payment transactions or mobile applications.

The plurality of electronic chips are preferably electrically personalized. Additionally or alternatively, a plurality of personalization elements such as graphical personalization elements are preferably provided on and/or in the second card body layer. The personalization elements are preferably arranged at least partially congruent with the electronic chips with respect to a vertical direction.

That is, an electrical personalization of the electronic chips can be done with a very high throughput due to the electronic chips being arranged on the reel tape and thus in a reel format. Consequently, an individual personalization of the electronic chips on individual smart cards as it is currently done in the state of the art can be dispensed with.

Furthermore, personalization elements such as prints or embossings or the like, i.e. a graphical personalization, can be generated on and/or in the second card body layer, preferably on its upper surface. These personalization elements can again be generated with a high throughput due to the reel format. The personalization elements are preferable arranged at least partially congruent with the electronic chips when seen along the vertical direction or the extension direction, respectively.

Since the electrical personalization and/or the graphical personalization can be done in reel these personalizations are more efficient and less expensive.

Further personalization of the smart cards could be provided by the reel tape. For instance, the electrically conductive layer of the reel tape could be customized with branding of the final customer, or it could be coloured, etc.

The method preferably further comprises the step of singulation, whereby individual smart cards comprising a single electronic chip are obtained. The singulation is preferably performed by cutting, punching, laser, routing, grinding or via a water jet and/or in a single steps or in two steps or more.

The singulation into the individual smart cards is preferably performed into a particular format being associated with an end-use of the smart cards. For instance, it is preferred that the reel tape, the card body layer(s) and the plurality of electronic chips are singulated into a form factor of a SIM card such as the 4FF format in the event that the smart card shall be used as a SIM card in a mobile phone. The 4FF format is also known as nanosim and preferably has a width of 12.3 millimeter ± 0,1 millimeter and a height of 8.8 millimeter ± 0.1 millimeter, with a thickness in the range of 0.67 millimeter + 0.03 millimeter/-0.07 millimeter. However, a singulation into other form factors or formats are likewise conceivable. For instance, the smart card can be manufactured in the format half 1FF or ID1 UICC, 2FF 3FF, etc., if desired. However, more complex shapes or a disk shape, etc., are likewise conceivable.

The individual smart cards preferably comprise a card body, and wherein the first card body layer and the second card body layer constitute said card body. Furthermore, and as mentioned earlier, the second card body layer preferably constitutes a bottom side of the smart card, and the electrically conductive layer of the reel tape preferably constitutes a top side of the smart card. Consequently, it is preferred that a thickness of these components after lamination are compliant with standards of smart cards. For instance, a total thickness of the smart card after lamination and when seen along the extension direction is preferably 0.67 millimeter ± 0.03-0.07 millimeter and thus corresponds to the 4FF format.

Hence, the method according to the invention allows the direct manufacturing of smart cards that can be readily used in their intended final applications, and wherein manufacturing steps such as card bodies lamination, molding or card body milling or embedding into cavities of card bodies as it is the case in the prior art solutions are dispensed with. Thereby, the quantity of the needed raw materials is significantly reduced as well. Furthermore, the method according to the invention allows the manufacturing of the smart cards with standard equipment as it is currently used in the card industry.

In a further aspect, a reel tape is used in a method of manufacturing a smart card such as a SIM card. The reel tape comprises at least one electrically conductive layer, at least one dielectric layer, and at least a first card body layer being laminated onto the reel tape. The method comprises the step of providing a plurality of electronic chips on the reel tape, and wherein the electronic chips are at least partially arranged in apertures of the first card body layer. The reel tape, the first card body layer, the apertures and the electronic chips preferably correspond to those as explained above.

In a further aspect, a method of manufacturing a reel tape for the manufacturing of a smart card such as a SIM card comprising an electronic module is provided. The method comprises the steps of providing at least one electrically conductive layer, and providing at least one dielectric layer. The method further comprises the step of laminating at least one card body layer onto the reel tape, wherein the card body layer is configured to at least partially receive a plurality of electronic chips. The dielectric layer, the electrically conductive layer, the first card body layer and the electronic chips and thus the reel tape preferably correspond to those as explained above.

Any explanations made herein regarding the method of manufacturing a smart card such as a SIM card preferably likewise apply to the use of a reel tape in a method of manufacturing a smart card and to the method of manufacturing a reel tape for the manufacturing of a smart card and vice versa.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1a: shows a cross-sectional view through a smart card being manufactured according to the method of the invention, wherein a first card body layer is laminated onto a reel tape comprising a dielectric layer and an electrically conductive layer, and wherein an electronic chip is arranged within apertures of the first card body layer and the dielectric layer;
- Fig. 1b: shows a cross-sectional view through the smart card according to figure 1a, wherein a second card body layer is laminated onto the first card body layer;
- Fig. 2: shows a top view on a reel tape according to the invention, wherein a plurality of electronic modules are provided sequentially and in two lines;
- Fig. 3: shows a top view on a reel tape according to the invention, wherein a plurality of electronic modules are provided sequentially and in five lines;
- Fig. 4a: shows a bottom view on a reel tape according to the invention, wherein a first card body layer has been laminated to the reel tape;
- Fig. 4b: shows a bottom view on the reel tape according to figure 4a, wherein a plurality of electronic chips is arranged in apertures of the first card body layer;
- Fig. 5a: shows a bottom view on a reel tape according to the invention, wherein a first card body layer has been laminated to the reel tape;
- Fig. 5b: shows a bottom view on the reel tape according to figure 5a, wherein a plurality of electronic chips is arranged in apertures of the first card body layer;
- Fig. 6a: shows a bottom view on a reel tape according to the invention, wherein a first card body layer and a further first card body layer have been laminated to the reel tape;
- Fig. 6b: shows a bottom view on the reel tape according to figure 6a, wherein a plurality of electronic chips is arranged in apertures of the first card body layer;
- Fig. 7: shows a bottom view of a smart card according to the invention, wherein the electronic chip is die bonded;
- Fig. 8: shows a bottom view of a smart card according to the invention, wherein the electronic chip is wire bonded ;
- Fig. 9: shows a bottom view of a smart card according to the invention, wherein an encapsulation element is provided;
- Fig. 10: shows a bottom view of a smart card according to the invention, wherein another encapsulation element is provided;
- Fig. 11: shows a top view of a smart card according to the invention;
- Fig. 12: shows a bottom view of a smart card according to the invention, wherein a graphical personalization element is provided.

### DESCRIPTION OF PREFERRED EMBODIMENTS

Various aspects of the present invention shall be illustrated with reference to the figures.

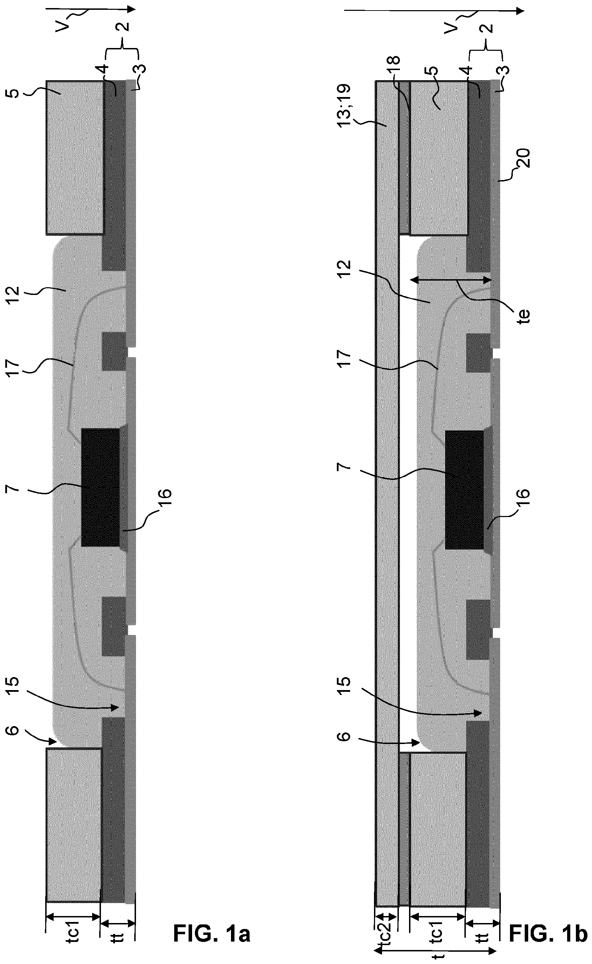

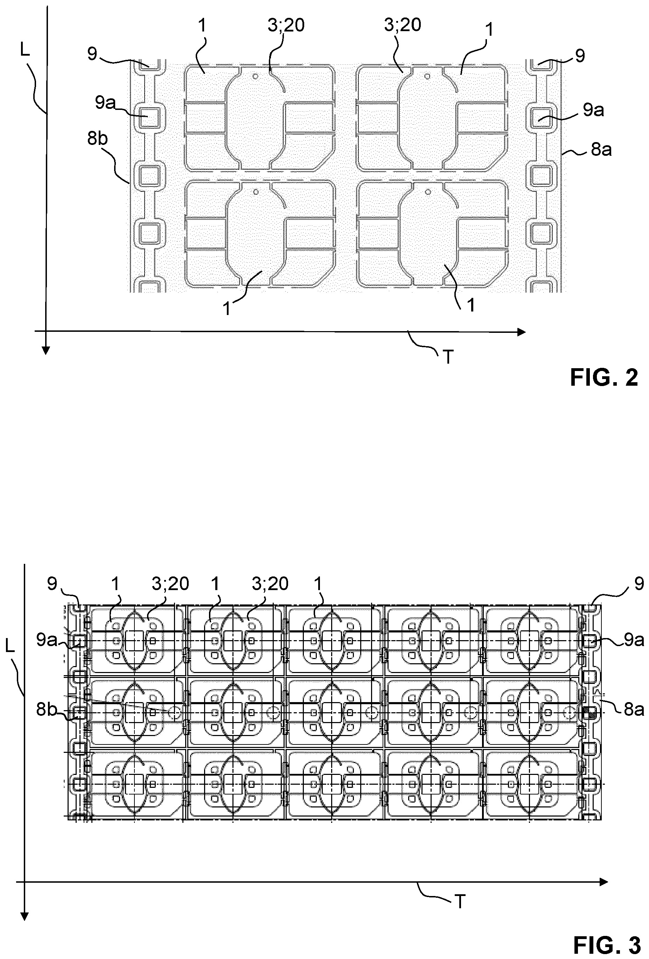

As follows from figures 1a and 1b, the present invention is based on the insight that smart cards 1 such as SIM cards can be manufactured in reel, wherein a first card body layer 5 is laminated onto a reel tape 2. As best seen in figures 3 to 6b, the reel tape 2 extends along a longitudinal direction L. Furthermore, the reel tape 2 comprises at least one electrically conductive layer 3 and at least one dielectric layer 4.

With respect to a vertical direction V running perpendicularly to the longitudinal direction L of the reel tape 2, the dielectric layer 4 is arranged above the electrically conductive layer 3 and the first card body layer 5 is arranged above the dielectric layer 4. That is, the first card body layer 5 is laminated onto the dielectric layer 4 of the reel tape 2. Both the first card body layer 5 and the dielectric layer 4 correspond to intermittent layers comprising a plurality of apertures 6, 6a, ...; 15, 15a, .... The apertures 6, 6a, ... in the first card body layer 5 and the apertures 15, 15a, ... in the dielectric layer 4 are arranged at least partially congruent when seen along the vertical direction V. A plurality of electronic chips 7, 7a, ... are received in these apertures 6, 6a, ...; 15, 15a, ...., see figures 1a to 6b.

In the example depicted in figures 1a and 1b, the first card body layer 5 corresponds to a pre-preg layer and is laminated directly onto the dielectric layer 4 of the reel tape 2 in the absence of an adhesive element or the like. The electronic chip 7 is attached to the electrically conductive layer 3 via an adhesive element 16, namely glued onto the electrically conductive layer 3, and is furthermore electrically connected to the electrically conductive layer 3 via wire bonding 17. The electronic chip 7 is furthermore encapsulated by an encapsulation element 12 that corresponds here to a resin that is filled into the apertures 6; 15 of the first card body layer 5 and the dielectric layer 4. The resin dispense is easy as the encapsulation dimension is defined by the size of the apertures 6; 15 in the first card body layer 5 and the dielectric layer 4. The viscosity of the resin is furthermore chosen such that the resin can spread sufficiently towards an edge of the apertures 6; 15 and to be furthermore of a flat shape. However, it should be noted that an encapsulation element 12 is not a requirement and that it can be dispensed with if desired. Furthermore, whereas in the depicted example a filling level of the resin and thus a thickness of the encapsulation element 12 with respect to the vertical direction V does not exceed a thickness tt of the reel tape 2 and a thickness tc1 the first card body layer 5, it is likewise conceivable to dispense enough resin in order for the resin filling level to be higher than said thickness tt of the reel tape 2 and said thickness tc1 of the first carrier body layer 5, in which case the resin can be used as an adhesive element that adheres e.g. a cover layer such as a second card body layer 13 (see below) on the first card body layer 5.

Figure 1b depicts the state where a second card body layer 13 has been laminated onto the first card body layer 5. The second card body layer 13 is a continuous layer that does not comprise any apertures or the like and which entirely extends above the first card body layer 5 with respect to the vertical direction V. That is, the second card body layer 13 closes the apertures 6, 6a, ...; 15, 15a, ... of the first card body layer 5 and of the dielectric layer 4 towards an outside. In particular, said second card body layer 13 can be seen as a cover layer that closes the smart card 1 such as the SIM, hides the electronic chip 7 and furthermore provides a flat outer surface in order to meet ETSI dimensions, for example. The thickness tc2 of the second card body layer 13 is preferably chosen in order that a total thickness t of the smart card on reel is in conformity with standard dimensions, for instance with the ETSI norm dimension in the case of a SIM card, and thus between 600 micrometer and 700 micrometer. Here, the second card body layer 13 corresponds to a thermoplastic polymer and transparent polymer such as PET or not such as PVC that is laminated onto the first card body layer 5 via an adhesive element 18.

As follows from figure 1b, the thickness tc1 of the first card body layer 5 is close to a thickness te of the encapsulation element 12 when seen along the vertical direction V. Furthermore, with respect to the vertical direction V, the total thickness t on reel meets a particular smart card standard and corresponds here to 0.67 millimeter +0.03-0.07 millimeter with respect to the vertical direction V.

The second card body layer 13 preferably constitutes a bottom side 19 of the smart card 1, and the electrically conductive layer 3 of the reel tape 2 preferably constitutes a top side 20 of the smart card 1. Moreover, the first card body layer 5 and the second card body layer 13 preferably constitute a so-called card body as it is well-known in the card industry.

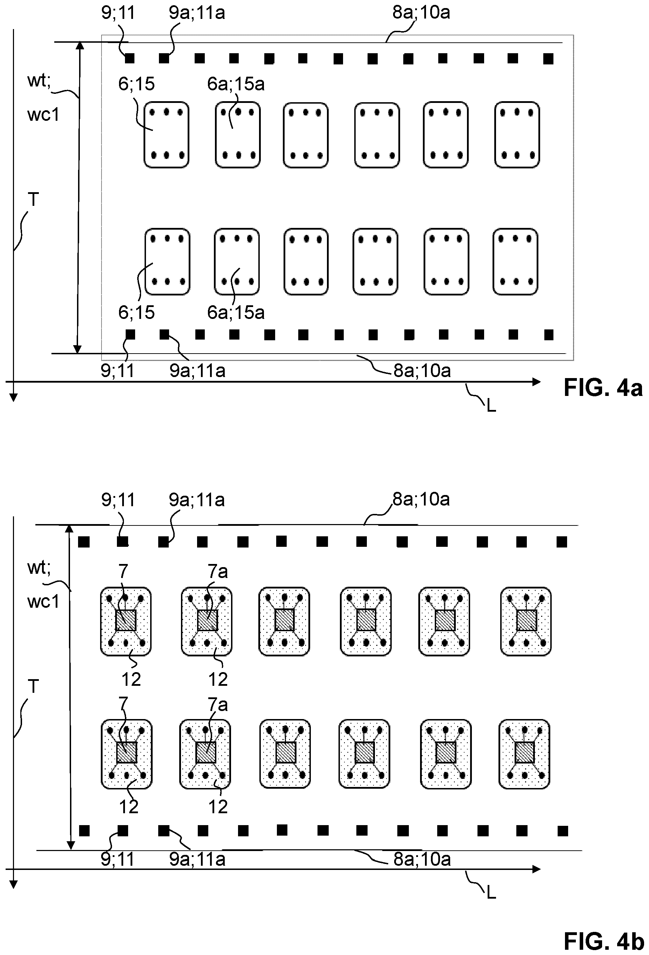

With respect to figures 2 to 6b various arrangements of these and further components of the smart card 1 shall be illustrated. In this regard it is noted that figures 4a, 5a and 6a depict the reel tape 2 without an electronic chip 7, 7a, ... being arranged in the apertures 6, 6a, ...; 15, 15a, ... of the card body layer 5 and the dielectric layer 4, and figures 4b, 5b and 6b depict the corresponding reel tape 2 and laminated card body layer 5 after the electronic chips 7, 7a, ... have been inserted into the apertures 6, 6a, ...; 15, 15a, .....

As follows from these figures, the apertures 6, 6a, ...; 15, 15a, ... and thus the electronic chips 7, 7a, ... can be arranged in lines extending along the longitudinal direction L of the reel tape 2. That is, figures 2 and 4a to 6b illustrate an arrangement of electronic chips 7, 7a, ... in two lines that extend parallel to one another and figure 3 is an example of electronic chips 7, 7a, ... being arranged in five parallel lines.

The reel tapes 2 of these figures are single-side reel tapes that already have the dimensions or multiples thereof of the final smart card 1, here of a 4FF SIM. In fact, this single-side reel tape 2 is a legacy one with for example a glass epoxy punched for bonding holes with a copper laminated thanks to an adhesive and being finally etched. A width wt of the reel tape 2 with respect to a transverse direction T running perpendicularly to the longitudinal direction L of the reel tape 2 in the event of the 4F SIMs thus preferably is 35mm, 70mm or 150mm. As becomes evident from figure 3, a larger width wt of the reel tape 2 allows to produce a higher density of the smart cards 1 such as the depicted 4FF SIMs. Besides, and as follows from figure 2, the method according to the inventions allows the manufacturing of smart cards 1 including a chamfer 21 in a bottom corner.

As furthermore follows from these figures, the reel tape 2 and the first card body layer 5 comprise longitudinal sides 8a, 8b; 10a, 10b extending along the longitudinal direction L, and wherein a plurality of perforations 9, 9a, ... are arranged in the reel tape 2 along the longitudinal direction L of the reel tape 2 and in regions of the longitudinal sides 8, 8a of the reel tape 2 (see figures 2 and 3) and/or a plurality of perforations 11, 11a, ... are arranged in the first card body layer 5 along the longitudinal direction L of the reel tape 2 and in regions of the longitudinal sides 10a, 10b of the first card body layer 5 (see figures 4a to 6b).

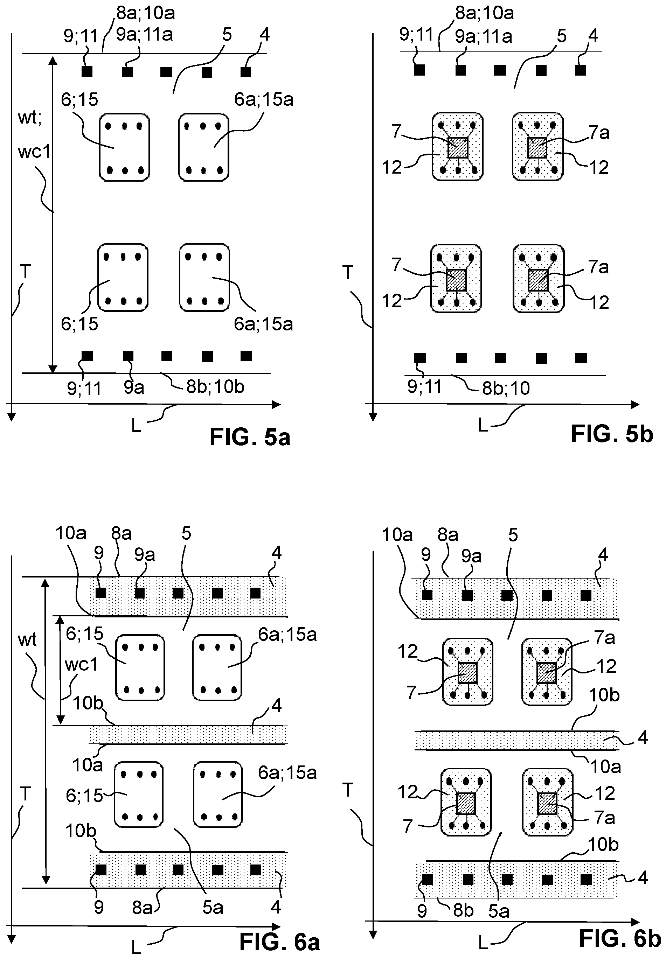

That is, figures 2 and 3 depict a reel tape 2 comprising perforations 9, 9a, ... that extend through the electrically conductive layer 3 and the dielectric layer 4 of the reel tape 2 with respect to the vertical direction V. Figures 4a to 5b depict perforations 11, 11a, ... that extend through the first card body layer 5 with respect to the vertical direction V. Figures 6a and 6b depict perforations 9, 9a, ... that extend through the dielectric layer 4 of the reel tape 2 with respect to the vertical direction V.

To this end it is noted that different extensions of the first carrier body layer 5 and thus also of the second carrier body layer 13 with respect to the transverse direction T are conceivable, see figures 4a to 6b, For instance, figures 4a to 5b depict a first carrier body layer 5 that extends along an entire width wt of the reel tape 2 with respect to the transverse direction T. That is, a width wc1 of the first carrier body layer 5 corresponds to the width wt of the reel tape 2 when seen along the transverse direction T. The longitudinal sides 10a, 10b of the first card body layer 5 are arranged congruent with the longitudinal sides 8a, 8b of the reel tape 2. This is in contrast to the first carrier body layer 5 of figures 6a and 6b, which has a width wc1 being smaller than the width wt of the reel tape 2 when seen along the transverse direction T.

As mentioned earlier, the electronic chips 7, 7a, ... are arranged within apertures 6, 6a, ... of the first card body layer 5 and within apertures 15, 15a, ... of the dielectric layer 4. These apertures 6, 6a, ...; 15, 15a, ... are arranged sequentially when seen along the longitudinal direction L of the reel tape, see figures 2 to 6b. Moreover, these apertures 6, 6a, ...; 15, 15a, ... can be arranged in a single line or in several lines.

In fact, figures 4b and 5b depict a single first card body layer 5 comprising electronic chips 7, 7a, ... being arranged within apertures 6, 6a,... of the first card body layer 5 that are arranged in two parallel lines. Figures 6a and 6b however depict two first carrier body layers 5, 5a, the first carrier body layer 5 and a further first carrier body layer 5a, that are extend parallel to one another along the longitudinal direction L of the reel tape T. Said further first card body layer 5a is laminated to the reel tape 2 and comprises a plurality of first apertures 6, 6a, ... receiving a plurality of electronic chips 7, 7a, ... as it is the case with the first card body layer 5. Here, said first card body layer 5 and the further first card body layer 5a are arranged laterally spaced from one another when seen along the transverse direction T of the reel tape 2. An advantage associated with the embodiment depicted in figures 6a and 6b is the an easier handling of the reel tape 2 during the different assembly since said embodiment comprises a reel tape 2 having a thickness tt at the location of its apertures 15, 15a, ... or sprocket holes, respectively, being standard for the equipment such as the module reel being typically used during the manufacturing of the smart cards according to the invention. In other words, in the region of the apertures 15, 15a, ... or sprocket holes, there is only the reel tape 2 being of a thickness tt that corresponds to an original thickness of commercially available reel tapes.

With respect to figures 4a to 6b it is furthermore noted that the reel tape 2 and the apertures 15, 15a, ... in the dielectric layer 4, which can also be called window holes, enable a chip bonding on the reel tape 2 through these apertures 15, 15a, ... or window holes. These apertures 15, 15a, ... or window holes furthermore enable a wire bonding and finally also a filling with an encapsulation element such as a protective resin through these same apertures 15, 15a, .... or window holes.

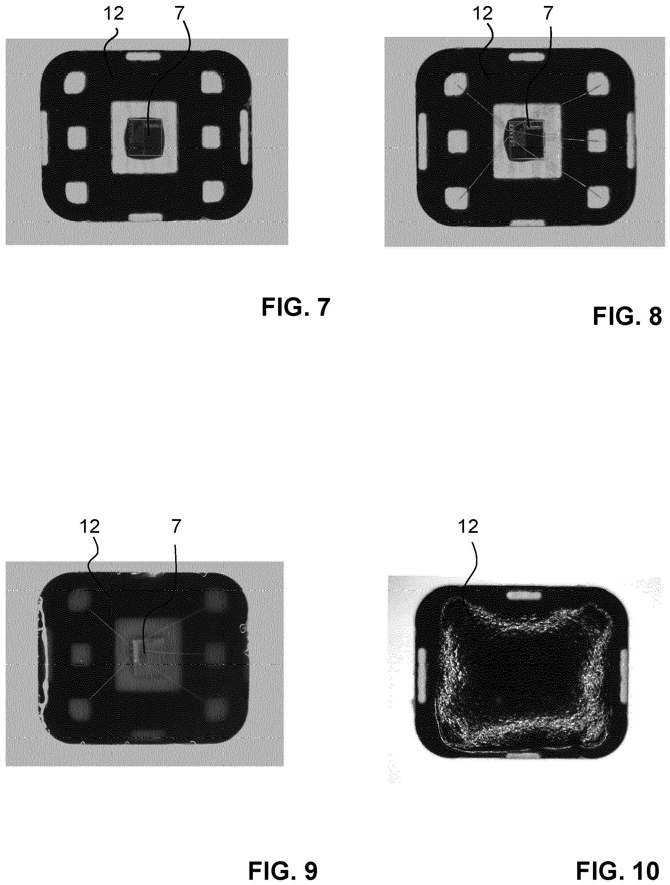

Various ways of electrically connecting the electronic chips 7, 7a, .... to the reel tape 2, in particular to the electrically conductive layer 3 of the reel tape 2, are conceivable, see figures 7 to 10. These figures illustrate the assembly steps on the reel tape 2 with the first card body layer(s) 5, 5a being laminated onto it. To this end figure 7 depicts an electronic chip 7 being die bonded to the electrically conductive layer 3. Figure 8 depicts an electronic module 7 being wire bonded or being produced in a flip chip process. Figure 9 depicts an electronic chip 7 being encapsulated with an encapsulation element 12 being a protective UV resin filling. Figure 10 illustrates the fact that other kinds of resins can be used as encapsulation element 12 such as a black thermal curing epoxy resin.

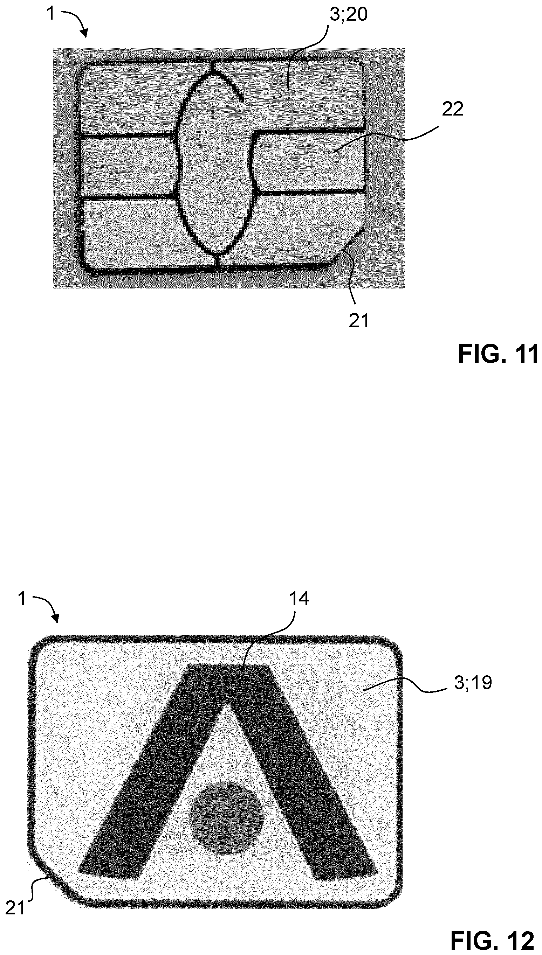

As follows from figures 11 and 12, the inventions allows the manufacturing of smart cards 1 comprising electrical contacts 22 and graphical personalization elements 14 that are produced in reel. The contact side of the reel tape 2, i.e. the electrically conductive layer 3, could be customized with the branding of the final customers by etching for example, see electrical contact 22 in figure 11. Figure 12 depicts another example of personalization element 14, wherein a mobile phone operator logo or the like is printed on the bottom side of the SIM card 1 and thus here to the second card body layer 13, with inkjet for example. Other examples are a bar code or QR code being printed or marked by laser.

After the plurality of smart cards 1 are produced in reel, they are singulated, whereby the individual smart cards 1 comprising a single electronic chip 7 and as depicted in figures 11 and 12 are obtained. That is, in a preferably final step of the method according to the invention singulation of the smart cards 1 is done so as to remove the individual smart cards 1 from the reel. The singulation serves the purpose of obtaining the individual smart cards in the desired format or size, for instance in the x and y final SIM dimension being in conformity with ETSI, i.e. 12.3mm x 8.8mm. The singulation can be done with laser, milling routing, punch, waterjet or other technics that are well-known in the art.

Hence, the present invention allows an environment friendly manufacturing of a smart card 1 such as a SIM with reduced costs since no embedding, no printing, and no separate card body manufacturing is required and which furthermore allows an easier electrical or graphical personalization in reel to reel.

**LIST OF REFERENCE SIGNS**

| | | | |
|---|---|---|---|
| 1 | smart card | 19 | bottom side |
| 2 | reel tape | 20 | top side |
| 3 | electrically conductive layer | 21 | chamfer |
| 4 | dielectric layer | 22 | electrical contact |
| 5, 5a | first card body layer | | |
| 6, 6a, ... | apertures | L | longitudinal direction |
| 7, 7a, ... | electronic chips | T | transverse direction |
| 8a, 8b | longitudinal side | V | vertical direction |
| 9, 9a, ... | perforation | wc1 | width first card body layer |
| 10a, 10b | longitudinal side | wt | width reel tape |
| 11, 11a, ... | perforation | t | thickness |
| 12 | encapsulation element | tt | thickness reel tape |
| 13 | second card body layer | tc1 | thickness first card body layer |
| 14 | personalization element | tc2 | thickness second card body layer |
| 15, 15a, ... | apertures | | |
| 16 | adhesive element | te | thickness encapsulation element |
| 17 | wire bonding | | |
| 18 | adhesive element | | |

## Claims

1. A method of manufacturing a smart card (1) such as a SIM card, the method comprising the steps of:
- Providing at least one reel tape (2) extending along a longitudinal direction (L), wherein the reel tape (2) comprises at least one electrically conductive layer (3) and at least one dielectric layer (4),
**characterized in that** the method further comprises the step of laminating at least a first card body layer (5) to the reel tape (2) in reel,
wherein the first card body layer (5) comprises a plurality of apertures (6, 6a, ...), and
wherein the apertures (6, 6a, ...) are configured to at least partially receive a plurality of electronic chips (7, 7a, ...).

2. The method according to claim 1, wherein the apertures (6, 6a, ...) are generated in the first card body layer (5) before the first card body layer (5) is laminated to the reel tape (2), and
wherein the apertures (6, 6a, ...) are preferably generated by punching the first card body layer (5).

3. The method according to any one of the preceding claims, wherein the reel tape (2) comprises longitudinal sides (8a, 8b) extending along the longitudinal direction (L), and wherein a plurality of perforations (9, 9a, ...) are arranged along the longitudinal direction (L) of the reel tape (2) and in regions of the longitudinal sides (8a, 8b) of the reel tape (2).

4. The method according to any one of the preceding claims, wherein the first card body layer (5) comprises longitudinal sides (10a, 10b) extending along the longitudinal direction (L) of the reel tape (2), and wherein a plurality of perforations (11, 11a, ...) are arranged along the longitudinal direction (L) of the reel tape (2) and in regions of the longitudinal sides (11, 11a) of the first card body layer (5).

5. The method according to any one of the preceding claims, wherein the first card body layer (5) and the reel tape (2) define in each case a width (wc1, wt) with respect to a transverse direction (T) running perpendicularly to the longitudinal direction (L) of the reel tape (2), and
wherein the width (wc1) of the first card body layer (5) essentially corresponds to the width (wt) of the reel tape (2) when seen along the transverse direction (T), or
wherein the width (wc1) of the fist card body layer (5) is smaller than the width (wt) of the reel tape (2) when seen along the transverse direction (T).

6. The method according to any one of the preceding claims, wherein the apertures (6, 6a, ...) of the first card body layer (5) are arranged sequentially when seen along the longitudinal direction (L) of the reel tape (2), and/or
wherein the apertures (6, 6a, ...) of the first card body layer (5) are arranged in a single line or in two or more preferably parallel lines when seen along the longitudinal direction (L) of the reel tape (2).

7. The method according to any one of the preceding claims, wherein the first card body layer (5) extends along the longitudinal direction (L) of the reel tape (2), and/or
wherein the first card body layer (5) is laminated directly onto the dielectric layer (4) of the reel tape (2) in the absence of an adhesive element or is laminated indirectly onto the dielectric layer (4) of the reel tape (2) via a first adhesive element.

8. The method according to any one of the preceding claims, wherein at least a further first card body layer (5a) is laminated to the reel tape (2), and
wherein said further first card body layer (5a) comprises a plurality of further first apertures (6, 6a, ...) being configured to receive a plurality of electronic chips (7, 7a, ...).

9. The method according to any one of the preceding claims, wherein a plurality of electronic chips (7, 7a, ...) are at least partially arranged in the apertures (6, 6a, ...) of the first card body layer (5) and, if present, in the further first card body layer (5a), and
wherein the electronic chips (7, 7a, ...) are in connection with the electrically conductive layer (3) of the reel tape (2), and/or
wherein the electronic chips (7, 7a, ...) are at least partially encapsulated by at least one encapsulation element (12), the encapsulation element (12) preferably being at least one of a resin and being filled into the apertures (6, 6a, ...) of the first card body layer (5) and, if present, into the further apertures (6, 6a, ...) of the further first card body layer (5a).

10. The method according to any one of the preceding claims, wherein at least a second card body layer (13) is laminated onto the first card body layer (5), and
wherein the second card body layer (13) extends along the longitudinal direction (L) of the reel tape (2) and/or closes the apertures (6, 6a, ...) of the first card body layer (5) towards an outside.

11. The method according to any one of the preceding claims, wherein the first card body layer (5) and, if present, the further first card body layer (5a) and/or the second card body layer (13) comprises or consists of at least one polymer and/or at least one paper-based compound, the polymer preferably being a thermoplastic polymer and/or a transparent polymer, or
wherein the first card body layer (5) and, if present, the further first card body layer (5a) and/or the second card body layer (13) comprise or consist of pre-impregnated fibers and a partially cured polymer matrix.

12. The method according to any one of the preceding claims, wherein the first card body layer (5) and/or a second card body layer (13) comprises at least one antenna, and
wherein at least one further electrically conductive layer is provided, said further electrically conductive layer being arranged between the first card body layer (5) and the reel tape (2) with respect to a vertical direction (V), and
wherein the further electrically conductive layer is preferably configured to communicate with the antenna in the first card body layer (5) and/or the second card body layer (13).

13. The method according to any one of claims 9 to 12, wherein the plurality of electronic chips (7, 7a, ...) are electrically personalized, and/or
wherein a plurality of personalization elements (14) are provided on and/or in the second card body layer, the personalization elements (14) being preferably arranged at least partially congruent with the electronic chips (7, 7a, ...) with respect to a vertical direction (V).

14. The method according to any one of the preceding claims, further comprising the step of singulation, whereby individual smart cards (1) comprising a single electronic chip (7, 7a, ...) are obtained, and
wherein the singulation is preferably performed by cutting, punching, laser, routing, grinding or via a water jet and/or in a single steps or in two steps or more.

15. Use of a reel tape (2) in a method of manufacturing a smart card (1) such as a SIM card,
wherein the reel tape (2) comprises:
- at least one electrically conductive layer (3),
- at least one dielectric layer (4), and
- at least a first card body layer (5) being laminated onto the reel tape (2), and
wherein the method comprises the step of providing a plurality of electronic chips (7, 7a, ...) on the reel tape (2), and wherein the electronic chips (7, 7a, ...) are at least partially arranged in apertures (6, 6a, ...) of the first card body layer (5).
